# FASCICULE DE BREVET EUROPEEN

(11) **EP 2 448 773 B1**
(45) Date de publication et mention de la délivrance du brevet: **11.11.2015**
(21) Numéro de dépôt: 10729839.0
(22) Date de dépôt: 28.06.2010
(51) Int. Cl.: B60C 11/04, B60C 99/00, B62D 17/00, B60C 19/00

(54) **ENSEMBLE ROUTIER COMPRENANT UN VEHICULE ET UN TRAIN DE PNEUS.**
STRASSENEINHEIT MIT EINEM FAHRZEUG UND EINEM REIFENSET
ROAD UNIT INCLUDING A VEHICLE AND A SET OF TYRES

(30) Priorité: 30.06.2009 FR 0954448
(43) Date de publication de la demande: 09.05.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LEVY, Nicolas, F-63000 Clermont-ferrand (FR); BLONDELET, Michel, F-63450 Le Crest (FR)
(74) Mandataire: Lasson, Cédric Y. M.
(86) Numéro de dépôt international: PCT/EP2010/059136
(87) Numéro de publication internationale: WO 2011/000802

(56) Documents cités:
- EP-A2- 1 002 666
- WO-A2-2008/155485
- DE-A1- 1 480 962
- DE-A1- 3 901 624
- JP-A- 2001 039 105

## Description

L'invention concerne les ensembles routiers comprenant un véhicule de tourisme et un train ou ensemble de pneus pour équiper l'essieu avant et l'essieu arrière dudit véhicule. L'invention concerne plus particulièrement les conditions d'assemblage spécifiques pour atteindre des performances de résistance au roulement améliorées sans pour autant dégrader la performance en usure des pneus.

L'évolution des véhicules de tourisme durant ces quinze dernières années s'est traduite le plus souvent par une augmentation de la masse totale de l'ensemble roulant, par une augmentation de la hauteur du centre de gravité du véhicule et par un déplacement du centre de gravité vers l'avant du véhicule. Ceci a pour conséquence une augmentation sensible de l'écart de charge statique et dynamique entre les deux essieux en créant un délestage de l'essieu arrière au détriment de l'essieu avant. L'essieu arrière se trouve en particulier relativement peu chargé en statique et très fortement délesté lors des phases de freinage.

Par définition, chaque roue d'un essieu d'un véhicule fait un angle, dit angle de braquage, avec un plan perpendiculaire au sol et parallèle à la direction d'avancement du véhicule. On parle de pince (« toe-in ») lorsque, sur un même essieu, les plans des roues de cet essieu convergent pour se couper vers l'avant du véhicule. Au contraire, on parle d'ouverture (« toe-out ») lorsque, sur un même essieu, les plans des roues de cet essieu convergent pour se couper vers l'arrière du véhicule.

Pour qu'un véhicule conserve une bonne stabilité lors de manoeuvres brusques de type freinage, évitement d'un obstacle ou changement de file, sans pour autant perdre en agrément de conduite et en vivacité, on a progressivement augmenté la pince de l'essieu arrière. Ainsi, la pince arrière est passée de valeurs relativement faibles, de l'ordre de 0,1 degré d'angle de braquage à chaque roue, à des valeurs plus élevées allant de 0,3 degré à 0,45 degré selon les conditions de chargement du véhicule.

Cette valeur de pince est appliquée de manière symétrique aux deux roues de l'essieu arrière. Ce réglage permet une préparation du véhicule à une perturbation sur sa trajectoire en mettant une roue en configuration de braquage dans le sens d'une remise en ligne du véhicule, tout en précontraignant le pneu concerné afin de le rendre plus réactif et lui permettre de générer une poussée transversale de rappel appropriée.

Bien entendu, ce réglage n'est pas sans conséquence sur l'usure des pneus de l'essieu arrière. Afin d'avoir une usure régulière et homogène sur toute la largeur de la bande de roulement des pneus de cette essieu, il est connu d'associer à cette pince un contre-carrossage statique. L'angle de carrossage d'une roue est l'angle que fait, dans un plan perpendiculaire au sol et contenant l'axe de la roue, le plan de la roue avec le plan médian du véhicule. On parle de contre-carrossage (ou de carrossage négatif) lorsque les plan des roues d'un même essieu se croisent au dessus du sol.

Toutefois, il est incontestable que ces réglages statiques (pince et carrossage) des roues de l'essieu arrière sont générateurs d'une usure accélérée du pneumatique et d'une augmentation de la consommation d'énergie en raison de l'augmentation de la résistance au roulement de l'ensemble roulant.

Pour pallier l'augmentation de l'usure, des travaux ont été faits afin de mettre au point des matériaux de bande de roulement ayant une résistance à l'usure améliorée. Ces solutions bien que satisfaisantes trouvent actuellement des limites puisque d'un côté on améliore les performances des matériaux et de l'autre côté on continue d'augmenter les réglages statiques, toujours pour les mêmes raisons.

De même, on ne profite pas intégralement des progrès réalisés dans le domaine de la résistance au roulement des pneumatiques puisque la traînée créée par la pince continue d'augmenter.

Un but de l'invention est de réduire la consommation moyenne de carburant d'un ensemble routier en diminuant la résistance au roulement et la traînée des ensembles roulants, par l'association d'un véhicule et de pneus appropriés.

L'invention propose ainsi un ensemble routier constitué d'un véhicule de tourisme comprenant un essieu avant et un essieu arrière, ledit essieu arrière étant équipé d'un système actif de contrôle du braquage permettant de contrôler le braquage des roues arrière entre au moins une position neutre et une position braquée, ledit ensemble routier étant en outre constitué d'un train de pneumatiques pour équiper l'essieu avant et l'essieu arrière de ce véhicule, chaque pneumatique de ce véhicule comprenant une région de sommet prolongée latéralement par des flancs se raccordant à des bourrelets destinés à être en contact avec la jante de montage, chaque pneu comportant une armature de carcasse s'étendant d'un bourrelet à un autre bourrelet en passant dans les flancs et le sommet du pneu, la région de sommet comprenant une armature de renforcement surmontée radialement à l'extérieur par une bande de roulement, cette bande de roulement comprenant radialement à l'extérieur une surface de roulement destinée à venir en contact avec la chaussée pendant le roulage du véhicule, une pluralité de rainures étant formées dans l'épaisseur de la bande, cet ensemble routier étant du type selon le prèambule de la revendication 1 connu du Document WO2008/155485 ultérieurement modifié selon la revendication 1, en particulier tel que :
▪ les profondeurs des rainures des bandes de roulement des pneus équipant l'essieu arrière sont au moins égales à 3 mm et au plus égales à 5 mm
▪ les profondeurs des rainures des bandes de roulement des pneus équipant l'essieu avant sont au moins égales à 5 mm, les profondeurs des rainures des bandes de roulement de l'essieu avant étant supérieures aux profondeurs des rainures des bandes de roulement de l'essieu arrière, et en ce que,
▪ le véhicule a, dans la positon neutre de braquage des roues arrière, des réglages (carrossage, pince) proches de zéro, c'est-à-dire un carrossage de chaque roue arrière compris entre -0.8 degré et +0.8 degré et une pince à la roue comprise entre -0.15 degré et +0.15 degré, ces réglages des roues arrière étant égaux en valeur absolue et symétriques par rapport à un plan médian du véhicule.

En outre, il a été constaté de manière surprenante que cette combinaison n'était pas pénalisante sur le plan de l'usure des pneus : ainsi employés dans un ensemble routier selon l'invention, les pneus ayant une bande de roulement d'épaisseur réduite avaient toutefois une durée d'usage sensiblement équivalente à celle des pneus usuels d'épaisseur de bande de roulement usuelle sur un véhicule à pince élevée. On mesure là tout l'intérêt de l'invention sur un plan environnemental puisque pour une même distance de roulage la quantité de gomme usée est réduite de façon sensible.

Dans la présente demande, le mot "rainure" signifie une cavité allongée ou découpure ayant une largeur telle que ses parois en vis-à-vis ne peuvent pas entrer en contact l'une sur l'autre ou encore une découpure dont les parois en vis-à-vis peuvent venir en contact l'une contre l'autre (dans ce dernier cas, on a affaire à ce qu'on nomme une "incision").

Selon l'invention, les rainures des bandes de roulement des pneus équipant l'essieu avant ont des profondeurs au moins égales à 5 mm et au plus égales à 8 mm, la plus petite des différences entre les profondeurs des rainures des bandes de roulement des pneus équipant l'essieu avant et les profondeurs des bandes de roulement des pneus équipant l'essieu arrière étant au moins égale à 1.5 mm.

De préférence le taux de surface de rainures des bandes de roulement des pneus de l'essieu arrière est au plus égal à 24% et est inférieur au taux de surface de rainures des bandes de roulement des pneus de l'essieu avant.

De préférence encore, le taux de surface de rainures des bandes de roulement des pneus de l'essieu avant est au moins égal à 25%.

Le taux de surface de rainures est égal au rapport entre la surface des rainures et la surface totale de la bande de roulement ; lorsque ce taux de surface de rainures est égal à zéro on peut considérer qu'il n'y a pas de rainures et lorsque ce taux est égal à 50%, cela signifie que la surface des rainures est sensiblement égale à la surface de la matière constituant la bande de roulement pouvant venir en contact avec la chaussée. L'invention permet donc, à usure identique, d'augmenter de façon sensible la surface de contact entre le pneu et la chaussée pour une même dimension de pneu et un même véhicule, ce qui est favorable en roulage.

De préférence, les pneus de l'essieu arrière sont gonflés à une pression de gonflage au moins égale à la pression de gonflage des pneus de l'essieu avant.

De préférence encore, la dimension des pneus de l'essieu avant est identique à la dimension des pneus de l'essieu arrière, la dimension d'un pneu étant définie par la norme E.T.R.T.O.

De préférence, le système actif de contrôle du braquage des roues arrière permet d'obtenir une position braquée de chaque roue correspondant à un angle de braquage au moins égal à 0.35°.

De préférence encore, le système actif de contrôle du braquage des roues arrière permet d'obtenir une position braquée de chaque roue correspondant à un angle de braquage au moins égal à 0.7°.

De préférence, la position braquée de chaque roue correspondant à un angle de pince et de préférence encore, le système actif de contrôle du braquage des roues arrière est un système binaire dont les deux états stables correspondent respectivement à la position neutre et la position braquée selon un angle de pince.

D'autres caractéristiques et avantages de l'invention ressortent de la description faite ci-après en référence aux figures annexées.
- La figure 1 montre en vue de côté un ensemble routier selon l'invention.
- La figure 2 montre schématiquement en vue de dessus l'ensemble routier de la figure 1.
- La figure 3 montre une coupe d'un pneu utilisé dans l'ensemble routier selon l'invention.

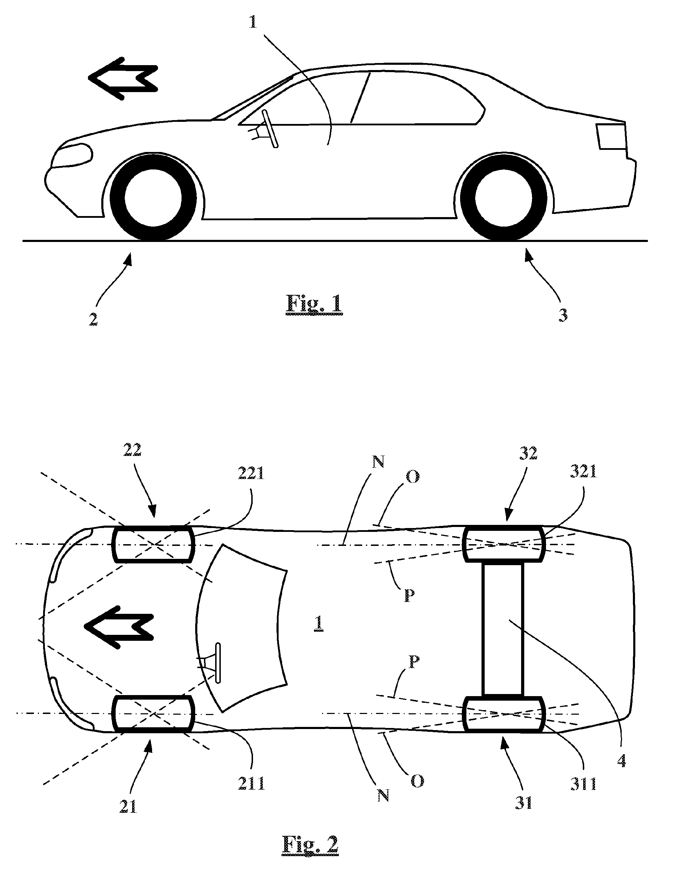

A la figure 1, on voit un véhicule de tourisme 1 vue de son côté gauche. A la figure 2, on voit schématiquement le même véhicule 1 en vue de dessus.

L'essieu avant 2 est donc à gauche des figures et l'essieu arrière 3 se trouve sur la droite des figures. La figure 2 permet de mieux visualiser un principe de l'invention selon lequel les roues gauche et droite (respectivement 31 et 32) de l'essieu arrière sont activement contrôlées en braquage à partir d'une position neutre N correspondant au roulage normal en ligne droite.

Le braquage actif de chaque roue arrière peut être indépendant ou dépendant de celui de l'autre roue arrière. Le braquage actif peut être possible dans les deux sens, c'est à dire dans le sens de l'ouverture O et dans le sens de la pince P. Si le braquage actif est limité à des mouvements de pince, on parle simplement de pince active.

Un principe essentiel de l'invention est de choisir une position de braquage neutre N qui corresponde à l'équivalent de réglages statiques proches de zéro (idéalement nuls), la position de braquage neutre étant en tous cas comprise entre - 0.15° et + 0.15° à la roue.

L'étendue angulaire du braquage actif ou de la pince active à partir de la position neutre peut être choisie en fonction de nombreux critères. Par exemple, si le braquage des roues arrière doit aussi permettre d'améliorer sensiblement la manoeuvrabilité du véhicule à basse vitesse (manoeuvres de parking), une amplitude importante (plusieurs degrés dans chaque sens) est nécessaire, par exemple de l'ordre de 10° dans chaque sens. En revanche, si le rôle du braquage arrière est limité à la garantie de la stabilité lors de manoeuvres d'urgence à haute vitesse (freinages, évitements), une amplitude réduite à 1 ou 2 degrés de pince s'est révélée toute à faite suffisante. Entre ces deux situations extrêmes, d'autres critères peuvent guider le choix concernant l'amplitude du braquage actif. Parmi ces autres critères, on peut citer l'encombrement du dispositif, son poids, sa compatibilité avec les solutions techniques existantes en matière de suspension ou de motorisation des roues, la sécurité du contrôle, le coût.

Les documents WO2006/117343, WO2007/012770, WO2008/155485, WO2008/155486, WO2008/061973 décrivent ainsi différents dispositifs et différentes méthodes de contrôle du braquage actif ou de la pince active.

On peut également associer une variation du carrossage aux mouvements de braquage ou de pince en recherchant à donner du carrossage négatif à la roue lorsqu'elle est braquée dans le sens de la pince et à donner du carrossage positif à la roue lorsqu'elle est braquée dans le sens de l'ouverture. Ceci peut être fait par l'intermédiaire d'actionneurs indépendants contrôlant le carrossage mais aussi tout simplement en inclinant de manière connue en soi l'axe de pivot utilisé pour le braquage des roues.

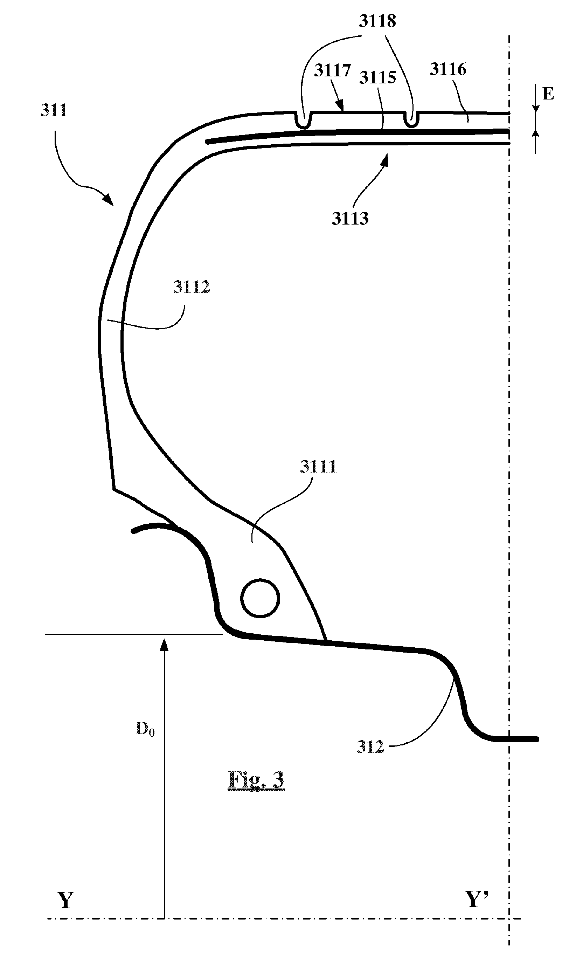

La figure 3 montre une vue partielle d'un pneu radial 311 utilisé dans l'ensemble routier selon l'invention, ce pneu étant monté sur une roue 312 et gonflé à sa pression d'usage. Ce pneu 311 vu dans un plan de coupe méridien, c'est-à-dire dire dans un plan contenant l'axe de rotation (YY'), comprend un bourrelet 3111 en contact avec la roue 312, ce bourrelet 3111 étant prolongé radialement vers l'extérieur par un flanc 3112, ce dernier se terminant par une partie de sommet 3113.

Ce pneu comprend une armature de carcasse, non représentée dans cette figure, qui est formée d'une pluralité de renforts faisant un angle égal ou proche de 90 degrés avec une direction tangente à la direction circonférentielle (c'est-à-dire une direction perpendiculaire au plan de coupe de la figure 3). Par ailleurs, la partie de sommet 3113 est renforcée par une armature de sommet 3115 surmontée d'une bande de roulement 3116 présentant une surface radialement externe destinée à venir en contact avec la chaussée pendant le roulage (cette surface est dite surface de roulement 3117).

Cette bande de roulement 3116 a une épaisseur moyenne E, mesurée comme la distance moyenne entre la surface de roulement 3117 et la surface radialement la plus à l'extérieur de l'armature de sommet 3115. Cette bande de roulement est pourvue d'une pluralité d'éléments de reliefs délimités par des rainures 3118 d'orientation circonférentielle et méridienne (dans la direction YY'). Le rapport entre la surface totale des rainures et la surface totale de l'empreinte de contact du pneu (cette dernière étant obtenue comme la surface délimitée par le contour le plus à l'extérieur de ladite empreinte de contact) est appelé taux d'entaillement.

Des essais ont permis de comparer les performances de l'ensemble routier selon l'invention à celles de l'ensemble routier de l'état de la technique.

Dans la configuration de référence, le test de roulage est fait avec un véhicule « Alfa Roméo 156 SW GTA » (marques déposées) 3.2 1 V6 (traction avant) dont les réglages étaient ceux d'origine déterminés par le constructeur, à savoir :
- Pince essieu AV : -1.2 ±0.5 mm soit -0.16° à la roue (on a ici une pince négative, c'est-à-dire une ouverture)
- Carrossage essieu AV : - 0° 50' à la roue
- Pince essieu AR : +1.6 ±0.5 mm soit 0.21° à la roue
- Carrossage essieu AR : -1° 20' à la roue

Les pneus montés sur l'essieu avant et sur l'essieu arrière sont des pneus de même dimension 225/45 R 17 94W.

Les pneus de l'essieu avant présentent les caractéristiques suivantes :
- Profondeur des rainures égale à 8 mm ; (profondeur des rainures à l'état neuf)
- Distance entre le fond des rainures et l'extérieur de l'armature de sommet : 1.8 mm
- Épaisseur de la bande de roulement : 9.8 mm
- Taux de surface de rainures : 30 % (ratio entre la surface de rainure et la surface totale de l'empreinte de contact sous pression d'usage et charge nominale)
- Pression de gonflage à froid : 2.5 bar

Les pneus de l'essieu arrière présentent les caractéristiques suivantes :
- Profondeur des rainures 8 mm (= profondeur des rainures à l'état neuf du pneu)
- Distance entre le fond des rainures et l'extérieur de l'armature de sommet : 1.8 mm
- Épaisseur de la bande de roulement : 9.8 mm
- Taux de surface de rainures : 30 %
- Pression d'usage à froid : 2.3 bar

Dans la configuration selon l'invention, le même test de roulage est fait avec le même véhicule dont l'essieu arrière comprend un dispositif de contrôle actif de la pince selon le document WO2008/155485, c'est à dire un système binaire dont les deux états stables correspondent respectivement à la position neutre et la position braquée selon un angle de pince.

Les réglages statiques et la position neutre de braquage des roues arrière sont réglés comme suit :
- Pince AV : 0°
- Carrossage AV : 0°
- Pince AR (position neutre N): 0°
- Carrossage AR : 0°

Les pneus de l'essieu avant présentent les caractéristiques suivantes :
- Profondeur des rainures à l'état neuf égale à 6.4 mm
- Distance entre le fond des rainures et l'extérieur de l'armature de sommet : 1.8 mm
- Épaisseur de la bande de roulement : 8.2 mm
- Taux de surface de rainures : 27 %
- Pression d'usage à froid : 2.5 bar

Les pneus de l'essieu arrière présentent les caractéristiques suivantes à l'état neuf :
- Profondeur des rainures à l'état neuf égale à 4 mm
- Distance entre le fond des rainures et l'extérieur de l'armature de sommet : 1.8 mm
- Épaisseur de la bande de roulement : 5.8 mm
- Taux de surface de rainures : 22 %
- Pression d'usage à froid : 2.8 bar

Avec chacune de ces deux configurations, il a été procédé à un roulage sur une distance de 78 km à une vitesse stabilisée de 100 km/h, avec la répartition suivante de charge entre l'essieu avant et l'essieu arrière: charge à l'essieu avant 900 daN, charge à l'essieu arrière 700 daN.

Lors de chaque roulage une mesure de consommation de carburant à été effectuée tous les 7.8 km. À partir de ces dix mesures, une consommation moyenne a été évaluée.

L'économie de consommation avec la configuration selon l'invention comparée à la configuration de référence, pour une vitesse stabilisée de 100 km/h, est de l'ordre de 0.24 litre par 100 kilomètres parcourus, soit un gain de 2.38% de consommation.

| | Consommation en litre/100 km |
|---|---|
| Configuration de référence | 10.07 |
| Invention | 9.83 |

En outre, des mesures de résistance au roulement ont été réalisées pour chaque configuration. Ces mesures ont été effectuées pour chaque pneu monté sur sa jante et à ses conditions de charge et de pression sur le véhicule ayant servi aux mesures de consommation.

La mesure de résistance au roulement est effectuée suivant la méthode décrite dans la norme ISO 18164 en utilisant les conditions d'usage des véhicules du test comparatif appliqués à un roulage sur un volant de chaque ensemble roue-pneu à une vitesse stabilisée de 80 km/h.

Le tableau 2 ci après donne les valeurs moyennes pour chaque position sur le véhicule pour la configuration de référence et celle de l'invention :

| Tableau 2 | | |
|---|---|---|
| | résistance au roulement Pneu AV | résistance au roulement pneu AR |
| Référence | 9.00 kg/T | 9.52 kg/T |
| Invention | 8.65 kg/T | 6.83 kg/T |

Ces mesures montrent que la configuration selon l'invention permet un gain en résistance au roulement par rapport à la configuration de référence. Ce gain se chiffre à 1.55 kg/T par pneu à 80 km/h (en moyenne des pneus des deux essieux). Ce résultat correspond à la moyenne de la résistance au roulement d'un pneu de l'essieu avant mesurée à sa pression d'usage et à la charge correspondant à la charge sur cet essieu pour le véhicule considéré (charge sur essieu de 450 daN et pression de gonflage de 2.5 bar) et de la résistance au roulement d'un pneu arrière mesurée à sa pression d'usage et à la charge correspondant à la charge sur l'essieu arrière (charge sur essieu de 350 daN et pression de gonflage de 2.3 bar pour la configuration de référence et 350 daN et 2.8 bar pour la configuration selon l'invention).

De manière avantageuse et comme cela a été fait pour les tests présentés ici, il est judicieux d'associer à cette invention une pression de gonflage supérieure à la pression de gonflage des pneus d'un même véhicule conservant des réglages statiques élevés. Il est ainsi avantageux que les pneus de l'essieu arrière soient gonflés à une pression de gonflage supérieure à la pression de gonflage des pneus de l'essieu avant, l'écart de pression étant au moins égal à 0.4 bar.

Dans le cadre de la présente invention, les mesures de pince et de carrossage sont effectuées dans les conditions de charge nominale, c'est à dire véhicule en ordre de marche avec deux personnes assises aux places avant et avec le réservoir de carburant plein.

L'invention n'est pas limitée aux exemples décrits et représentés et diverses modifications peuvent y être apportées sans sortir de son cadre, qui reste défini par les revendications.

## Revendications

1. Ensemble routier constitué d'un véhicule de tourisme (1) comprenant un essieu avant (2) et un essieu arrière (3), ledit essieu arrière étant équipé d'un système actif de contrôle du braquage (4) permettant de contrôler le braquage des roues arrière (31, 32) entre au moins une position neutre et une position braquée, ledit ensemble routier étant en outre constitué d'un train de pneumatiques (211, 221, 311, 321) pour équiper l'essieu avant et l'essieu arrière de ce véhicule, chaque pneu de ce véhicule comprenant une région de sommet (3113) prolongée latéralement par des flancs (3112) se raccordant à des bourrelets (3111) destinés à être en contact avec la jante de montage (312), chaque pneu comportant une armature de carcasse s'étendant d'un bourrelet à un autre bourrelet en passant dans les flancs et le sommet du pneu, la région de sommet comprenant une armature de renforcement (3115) surmontée radialement à l'extérieur par une bande de roulement (3116), cette bande de roulement comprenant radialement à l'extérieur une surface de roulement (3117) destinée à venir en contact avec la chaussée pendant le roulage du véhicule, une pluralité de rainures (3118) étant formées dans l'épaisseur de la bande, le véhicule ayant, dans la positon neutre de braquage des roues arrière, des réglages carrossage et pince proches de zéro, c'est-à-dire un carrossage de chaque roue arrière compris entre -0.8 degré et +0.8 degré et une pince à la roue comprise entre -0.15 degré et +0.15 degré, ces réglages des roues arrière étant égaux en valeur absolue et symétriques par rapport à un plan médian du véhicule, cet ensemble routier étant **caractérisé en ce que** :
▪ les profondeurs des rainures des bandes de roulement des pneus à l'état neuf équipant l'essieu arrière sont au moins égales à 3 mm et au plus égales à 5 mm,
▪ les profondeurs des rainures des bandes de roulement des pneus à l'état neuf équipant l'essieu avant sont au moins égales à 5 mm et au plus égales à 8 mm, les profondeurs des rainures des bandes de roulement de l'essieu avant étant supérieures aux profondeurs des rainures des bandes de roulement de l'essieu arrière, la plus petite des différences entre les profondeurs des rainures des bandes de roulement des pneus équipant l'essieu avant et les profondeurs des bandes de roulement des pneus équipant l'essieu arrière étant au moins égale à 1.5.

2. Ensemble routier selon la revendication 1 dans lequel le taux de surface de rainures des bandes de roulement des pneus de l'essieu arrière est au plus égal à 24% et est inférieur au taux de surface de rainures des bandes de roulement des pneus de l'essieu avant, ce taux de surface de rainures étant égal au rapport de surface des creux à la surface totale de la bande de roulement.

3. Ensemble routier selon l'une des revendications précédentes dans lequel le taux de surface de rainures des bandes de roulement des pneus de l'essieu avant est au moins égal à 25%.

4. Ensemble routier selon l'une des revendications précédentes dans lequel les pneus de l'essieu arrière sont gonflés à une pression de gonflage au moins égale à la pression de gonflage des pneus de l'essieu avant.

5. Ensemble routier selon l'une des revendications précédentes dans lequel la dimension des pneus de l'essieu avant est identique à la dimension des pneus de l'essieu arrière, la dimension d'un pneu étant définie par la norme E.T.R.T.O.

6. Ensemble routier selon l'une des revendications précédentes dans lequel le système actif de contrôle du braquage des roues arrière permet d'obtenir une position braquée de chaque roue correspondant à un angle de braquage au moins égal à 0.35°.

7. Ensemble routier selon l'une des revendications précédentes dans lequel le système actif de contrôle du braquage des roues arrière permet d'obtenir une position braquée de chaque roue correspondant à un angle de braquage au moins égal à 0.7°.

8. Ensemble routier selon l'une des revendications précédentes dans lequel la position braquée de chaque roue correspond à un angle de pince.

9. Ensemble routier selon la revendication 8 dans lequel le système actif de contrôle du braquage des roues arrière est un système binaire dont les deux états stables correspondent respectivement à la position neutre et la position braquée selon un angle de pince.

## Patentansprüche

1. Straßeneinheit, welche von einem Personenkraftfahrzeug (1) gebildet wird, welches eine Vorderachse (2) und eine Hinterachse (3) aufweist, wobei die Hinterachse mit einem aktiven Lenksteuersystem (4) ausgerüstet ist, welches es ermöglicht, die Lenkung der Hinterräder (31, 32) zwischen mindestens einer neutralen Position und einer eingeschlagenen Position zu steuern, wobei die Straßeneinheit außerdem von einem Satz von Reifen (211, 221, 311, 321) gebildet wird, um die Vorderachse und die Hinterachse dieses Fahrzeugs auszurüsten, wobei jeder Reifen dieses Fahrzeugs einen Scheitelbereich (3113) aufweist, welcher von Flanken (3112) seitlich verlängert wird, die sich mit Wülsten (3111) verbinden, welche dafür vorgesehen sind, mit der Montagefelge (312) in Kontakt zu stehen, wobei jeder Reifen eine Karkassenbewehrung aufweist, welche sich von einer Wulst zu einer anderen Wulst erstreckt und dabei in den Flanken und dem Scheitel des Reifens verläuft, wobei der Scheitelbereich eine Verstärkungsbewehrung (3115) umfasst, welche außen von einem Reifenlaufband (3116) radial überdeckt ist, wobei dieses Reifenlaufband außen eine Reifenlauffläche (3117) aufweist, welche dafür vorgesehen ist, mit der Straße während der Fahrt des Fahrzeugs in Kontakt zu kommen, wobei eine Vielzahl von Rillen (3118) in der Dicke des Bandes ausgebildet sind, wobei das Fahrzeug bei neutraler Lenkposition der hinteren Räder Einstellungen für Sturz und Spur von nahezu Null aufweist, das heißt einen Sturz für jedes Hinterrad, der zwischen -0,8 Grad und + 0,8 Grad liegt, und eine Spur am Rad, die zwischen -0,15 Grad und + 0,15 Grad liegt, wobei diese Einstellungen der Hinterräder als Absolutwert gleich und in Bezug auf eine Mittelebene des Fahrzeugs symmetrisch sind, wobei diese Straßeneinheit **dadurch gekennzeichnet ist, dass**:
Die Tiefen der Rillen der Reifenlaufbänder der Reifen in neuem Zustand, welche die Hinterachse ausrüsten, mindestens 3 mm und höchstens 5 mm beträgt,
Die Tiefen der Rillen der Reifenlaufbänder der Reifen in neuem Zustand, welche die Vorderachse ausrüsten, mindestens 5 mm und höchstens 8 mm betragen, wobei die Tiefen der Rillen der Reifenlaufbänder der Vorderachse größer sind als die Tiefen der Rillen der Reifenlaufbänder der Hinterachse, wobei der kleinste Unterschied zwischen den Tiefen der Rillen der Reifenlaufbänder der Reifen, welche die Vorderachse ausrüsten, und den Tiefen der Rillen der Reifenlaufbänder der Reifen, welche die Hinterachse ausrüsten, mindestens 1,5 mm beträgt.

2. Straßeneinheit nach Anspruch 1, bei welcher der Anteil der Fläche der Rillen der Reifenlaufbänder der Reifen der Hinterachse höchstens 24% beträgt und kleiner als der Anteil der Fläche der Rillen der Reifenlaufbänder der Reifen der Vorderachse ist, wobei dieser Flächenanteil der Rillen gleich dem Verhältnis der Fläche der Vertiefungen zur Gesamtfläche des Reifenlaufbandes ist.

3. Straßeneinheit nach einem der vorhergehenden Ansprüche, bei welcher der Anteil der Fläche der Rillen der Reifenlaufbänder der Reifen der Hinterachse mindestens 25% beträgt.

4. Straßeneinheit nach einem der vorhergehenden Ansprüche, bei welcher die Reifen der Hinterachse auf einen Reifendruck aufgepumpt sind, welcher mindestens gleich dem Reifendruck der Reifen der Vorderachse ist.

5. Straßeneinheit nach einem der vorhergehenden Ansprüche, bei welcher die Abmessung der Reifen der Vorderachse mit der Abmessung der Reifen der Hinterachse identisch ist, wobei die Abmessung eines Reifens durch die Norm ETRTO bestimmt wird.

6. Straßeneinheit nach einem der vorhergehenden Ansprüche, bei welcher das aktive Lenksteuersystem der hinteren Räder es ermöglicht, eine eingeschlagene Position eines jeden Rades zu erzielen, die einem Lenkwinkel von mindestens 0,35° entspricht.

7. Straßeneinheit nach einem der vorhergehenden Ansprüche, bei welcher das aktive Lenksteuersystem der hinteren Räder es ermöglicht, eine eingeschlagene Position eines jeden Rades zu erzielen, die einem Lenkwinkel von mindestens 0,7° entspricht.

8. Straßeneinheit nach einem der vorhergehenden Ansprüche, bei welcher die eingeschlagene Position eines jeden Rades einem Spurwinkel entspricht.

9. Straßeneinheit nach Anspruch 8, bei welcher das aktive Lenksteuersystem der hinteren Räder ein binäres System ist, dessen beide stabilen Zustände jeweils der neutralen Position und der gemäß einem Spurwinkel eingeschlagenen Position entsprechen.

## Claims

1. Road-going unit consisting of a passenger vehicle (1) comprising a front axle (2) and a rear axle (3), the said rear axle being equipped with an active steering control system (4) for controlling the steering of the rear wheels (31, 32) between at least a neutral position and a turned position, the said road-going unit further consisting of a set of tyres (211, 221, 311, 321) to be fitted to the front axle and to the rear axle of this vehicle, each tyre of this vehicle comprising a crown region (3113) extended laterally by sidewalls (3112) connecting to beads (3111) intended to be in contact with the mounting rim (312), each tyre comprising a carcass reinforcement extending from one bead to another bead, passing through the sidewalls and crown of the tyre, the crown region comprising a reinforcement (3115) surmounted radially on the outside by a tread strip (3116), this tread strip comprising, radially on the outside, a tread surface (3117) intended to come into contact with the road surface when the vehicle is running, a plurality of grooves (3118) being formed in the thickness of the tread, when the rear wheels are in the neutral steering position, the vehicle camber and toe-in settings close to zero, that is to say a camber angle for each rear wheel comprised between -0.8 degree and +0.8 degree and a toe-in angle at the wheel comprised between -0.15 degree and +0.15 degree, these settings of the rear wheels being equal in terms of absolute value and symmetric about a median plane of the vehicle this road-going unit being **characterized in that**:
• the depths of the grooves of the tread strips of the tyres in the new condition fitted to the rear axle are at least equal to 3 mm and at most equal to 5 mm,
• the depths of the grooves of the tread strips of the tyres in the new condition fitted to the front axle are at least equal to 5 mm and at most equal to 8 mm, the depths of the grooves of the tread strips of the front axle being greater than the depths of the grooves of the tread strips of the rear axle, the smallest of the differences between the depths of the grooves of the tread strips of the tyres fitted to the front axle and the depths of the tread strips of the tyres fitted to the rear axle being at least equal to 1.5 mm.

2. Road-going unit according to Claim 1, in which the groove-to-rubber ratio of the tread strips of the tyres of the rear axle is at most equal to 24% and is less than the groove-to-rubber ratio of the tread strips of the tyres of the front axle, this groove-to-rubber ratio being equal to the ratio of the surface area of the cavities with respect to the total surface area of the tread strip.

3. Road-going unit according to either of the preceding claims, in which the groove-to-rubber ratio of the tread strips of the tyres of the front axle is at least equal to 25%.

4. Road-going unit according to one of the preceding claims, in which the tyres of the rear axle are inflated to an inflation pressure at least equal to the inflation pressure of the tyres of the front axle.

5. Road-going unit according to one of the preceding claims, in which the size of the tyres on the front axle is identical to the size of the tyres of the rear axle, the size of a tyre being defined by the E.T.R.T.O. standard.

6. Road-going unit according to one of the preceding claims, in which the active steering control system for the rear wheels makes it possible to obtain a turned position for each wheel that corresponds to a steering angle of at least 0.35°.

7. Road-going unit according to one of the preceding claims, in which the active steering control system for the rear wheels makes it possible to obtain a turned position for each wheel that corresponds to a steering angle of at least 0.7°.

8. Road-going unit according to one of the preceding claims, in which the turned position of each wheel corresponding to a toe-in angle.

9. Road-going unit according to Claim 8, in which the active steering control system for the rear wheels is a binary system the two stable states of which correspond respectively to the neutral position and the position turned to a toe-in angle.
